# FASCICULE DE BREVET EUROPEEN

(11) **EP 0 682 184 B1**
(45) Date de publication et mention de la délivrance du brevet: **08.07.1998**
(21) Numéro de dépôt: 95400821.5
(22) Date de dépôt: 11.04.1995
(51) Int. Cl.: F16B 2/24, F16B 2/20, F16B 2/22

(54) **Attache élastique perfectionnée**
Verbesserte elastische Befestigung
Improved elastic attachment

(30) Priorité: 11.05.1994 FR 9405840
(43) Date de publication de la demande: 15.11.1995
(73) Titulaire: AUTOMOBILES PEUGEOT, 75116 Paris (FR); AUTOMOBILES CITROEN, 92200 Neuilly-sur-Seine (FR)
(72) Inventeur: Lafond, Didier, F-25420 Bart (FR)
(74) Mandataire: Polus, Camille

(56) Documents cités:
- EP-A- 0 478 403
- DE-A- 2 041 698
- GB-A- 2 029 894

## Description

La présente invention concerne une attache élastique perfectionnée.

On connaît déjà dans l'état de la technique, notamment d'après EP-A-0 478 403, une attache élastique destinée à l'accrochage d'une pièce sur un support, l'attache étant destinée à être portée par le support et comportant, d'une part, des moyens d'accrochage escamotables rappelés élastiquement en position active, destinés à coopérer avec des moyens d'accrochage complémentaires agencés sur la pièce, et d'autre part, des moyens libérables de blocage des moyens d'accrochage en position escamotée.

Des attaches de ce type permettent d'accrocher par exemple une visière de combiné d'instruments de bord sur une planche de bord de véhicule automobile.

On utilise généralement plusieurs attaches élastiques pour accrocher une pièce sur un support. Pour démonter la pièce, il est nécessaire d'escamoter simultanément les moyens d'accrochage de chaque attache élastique, au moyen d'un outil adapté. Cette opération s'avère difficile lorsque le nombre d'attaches est élevé.

L'invention a pour but de simplifier le démontage d'une pièce accrochée sur un support par plusieurs attaches élastiques.

A cet effet l'invention a pour objet une attache élastique du type précité, caractérisée en ce qu'elle est constituée d'une seule pièce métallique en forme de bande pliée, les moyens de blocage comprenant des moyens complémentaires d'encliquetage ménagés dans cette bande.

Suivant d'autres caractéristiques de l'invention:
- les moyens de blocage sont activés par escamotage des moyens d'accrochage suivant une course supérieure à la course d'escamotage minimale requise pour effectuer l'accrochage de la pièce sur le support ;
- les moyens complémentaires d'encliquetage sont libérables par déplacement relatif entre eux sensiblement transversalement par rapport à leur direction d'encliquetage ;
- l'attache comprend une embase de fixation sur le support et une rampe d'escamotage des moyens d'accrochage qui relie ces moyens d'accrochage à l'embase de fixation et qui est repliable vers l'embase, à l'encontre de la force élastique de rappel des moyens d'accrochage, pour escamoter ces moyens d'accrochage, les moyens complémentaires d'encliquetage comportant deux crochets complémentaires solidaires, le premier, de l'embase de fixation et, le second, de la rampe d'escamotage, ce second crochet étant déformable élastiquement perpendiculairement à sa direction d'encliquetage ;
- les deux crochets sont délimités par deux languettes découpées dans la bande de façon à ménager un premier crevé dans l'embase et un second crevé dans la rampe, ce dernier crevé permettant l'accès d'un outil destiné à solliciter le second crochet sensiblement perpendiculairement à la direction d'encliquetage, pour le libérer du premier crochet ;
- l'embase forme une pince destinée à enserrer une patte de fixation solidaire du support, cette pince étant délimitée par deux ailes de serrage reliées par une âme, l'extrémité libre d'une première aile de serrage étant prolongée par la rampe d'escamotage, et le premier crevé étant ménagé dans l'âme de la pince.

D'autres caractéristiques et avantages de l'invention apparaîtront à la lecture de la description détaillée qui va suivre, donnée uniquement à titre d'exemple, pour la compréhension de laquelle on se reportera aux dessins annexés dans lesquels :

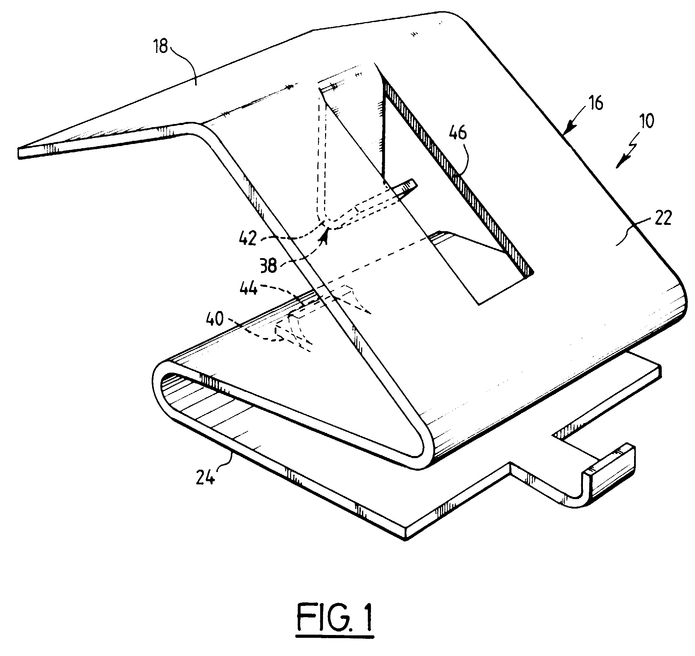

- la figure 1 est une vue en perspective d'une attache élastique selon l'invention ;
- les figures 2 à 6 sont des vues en coupe longitudinale de l'attache de la figure 1, montrant différentes positions de cette attache au cours du montage et du démontage d'une pièce sur un support.

On a représenté sur les figures une attache élastique 10 selon l'invention, destinée à l'accrochage d'une pièce 12 sur un support 14, par exemple une visière de combiné d'instruments de bord sur une planche de bord de véhicule automobile.

L'attache 10 est constituée d'une seule pièce métallique formant une bande 16 pliée, par exemple en acier déformable élastiquement, délimitant, d'une extrémité à l'autre de la bande 16, une patte d'accrochage 18 destinée à coopérer avec une saillie d'accrochage 20, de forme complémentaire, solidaire de la pièce 12, une rampe 22 d'escamotage de la patte d'accrochage 18 et une pince 24 formant embase de fixation de l'attache sur le support 14.

La pince 24 est délimitée par deux ailes 26,28 de serrage d'une patte de fixation 30 solidaire du support 14, reliées par une âme 32.

La patte d'accrochage 18, la rampe d'escamotage 22 et la pince 24 sont délimitées par des plis transversaux de la bande sensiblement parallèles à l'âme 32 de la pince.

L'extrémité libre d'une première aile de serrage 26 est prolongée par la rampe d'escamotage 22 de manière que cette rampe 22 puisse être repliée vers la pince 24 à l'encontre d'une force élastique de rappel de cette rampe 22 et de la patte d'accrochage 18 en position active.

L'extrémité libre de la seconde aile de serrage 28 est prolongée par un talon 34 destiné à coopérer avec un talon complémentaire 36 de la patte de fixation 30 de manière à immobiliser cette dernière dans la pince 24.

L'attache élastique 10 comporte des moyens libérables 38 de blocage de la patte d'accrochage 18 en position escamotée.

Les moyens de blocage 38 comprennent deux crochets complémentaires 40,42 solidaires, le premier de la pince de fixation 24 et, le second, de la rampe d'escamotage 22.

Les deux crochets 40,42 sont délimités par deux languettes découpées dans la bande 16 en ménageant un premier crevé 44 dans l'âme 32 de la pince 24 et un second crevé 46 dans la rampe d'escamotage 22.

Le premier crochet 40 est rectiligne et aligné avec la seconde aile de serrage 28. Le second crochet 42 s'étend sensiblement parallèlement à la direction d'escamotage de la patte d'accrochage 18 et comporte une extrémité libre recourbée destinée à coopérer par encliquetage avec le premier crochet 40 lorsque la rampe d'escamotage 22 est repliée vers la pince 24.

Le second crochet 42, délimité par une languette plus longue que celle du premier crochet 40, est déformable élastiquement perpendiculairement à sa direction d'encliquetage.

Les montages successifs de l'attache 10 et de la pièce 12 sur le support 14 se font de façon classique.

L'attache 10 est fixée sur le support 14 par accrochage de la pince 24 sur la patte de fixation 30 du support.

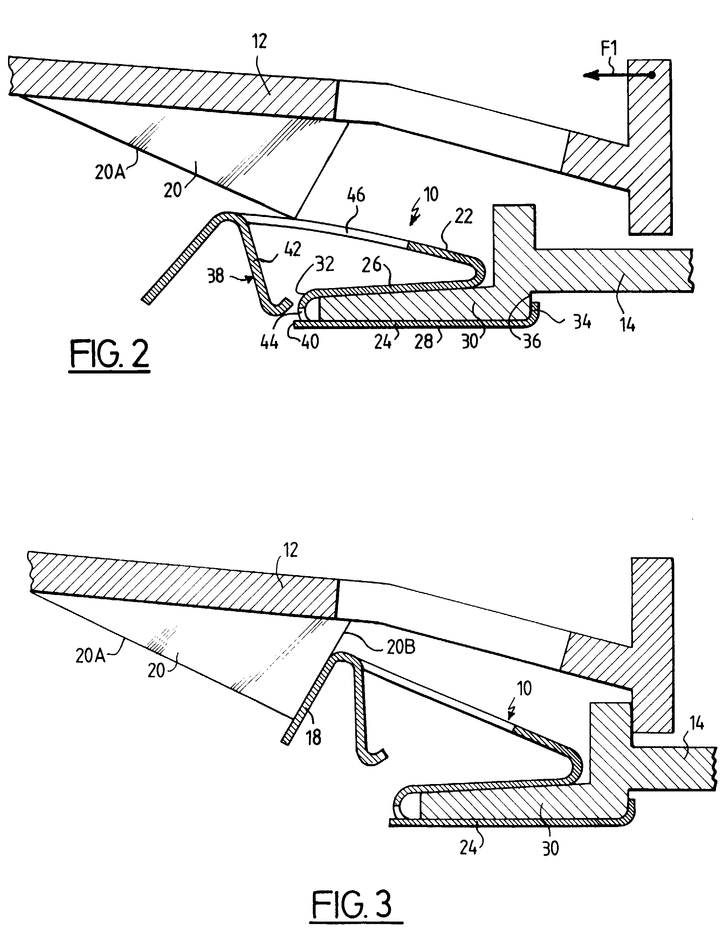

La pièce 12 est accrochée sur le support 14 en la déplaçant vers sa position d'accrochage, dans le sens indiqué par la flèche F1 sur la figure 2, la patte d'accrochage 18 s'escamotant par coopération de la rampe 22 avec une rampe complémentaire 20A délimitant la saillie 20.

Sur la figure 3, on a représenté la pièce 12 en position accrochée sur le support 14. Dans ce cas, la patte d'accrochage 18 est en position active en appui contre une surface d'accrochage complémentaire 20B délimitant la saillie 20.

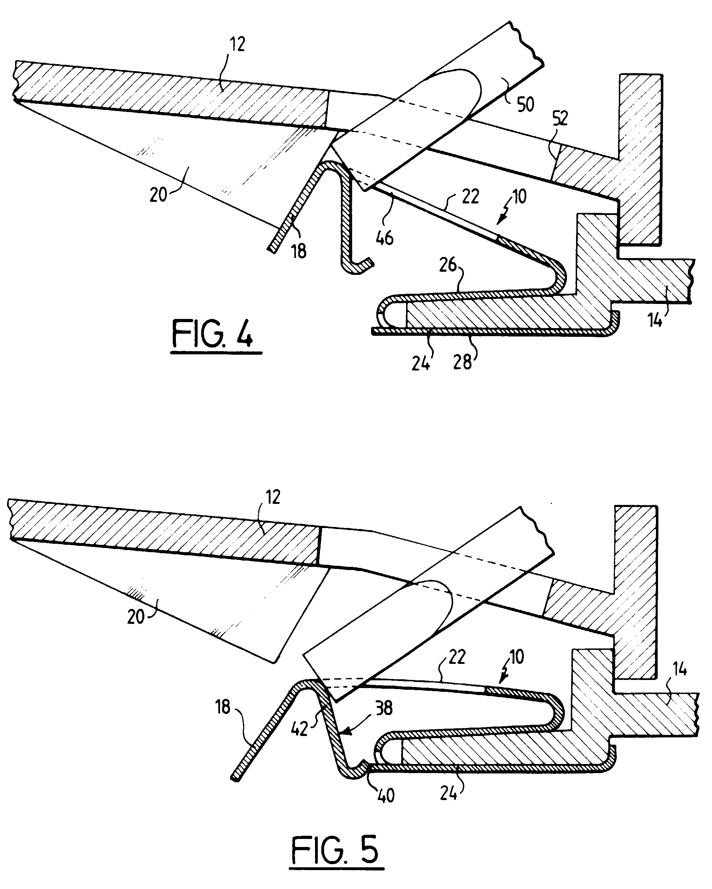

Pour démonter la pièce 12, on escamote la patte d'accrochage 18 en repliant la rampe 22 vers la pince 24 au moyen d'un outil classique, par exemple une lame de tournevis 50 qui est introduite à travers une ouverture d'accès 52 de la pièce 12 et qui est calée en appui sur un bord du crevé 46 ménagé dans la rampe (voir figure 4).

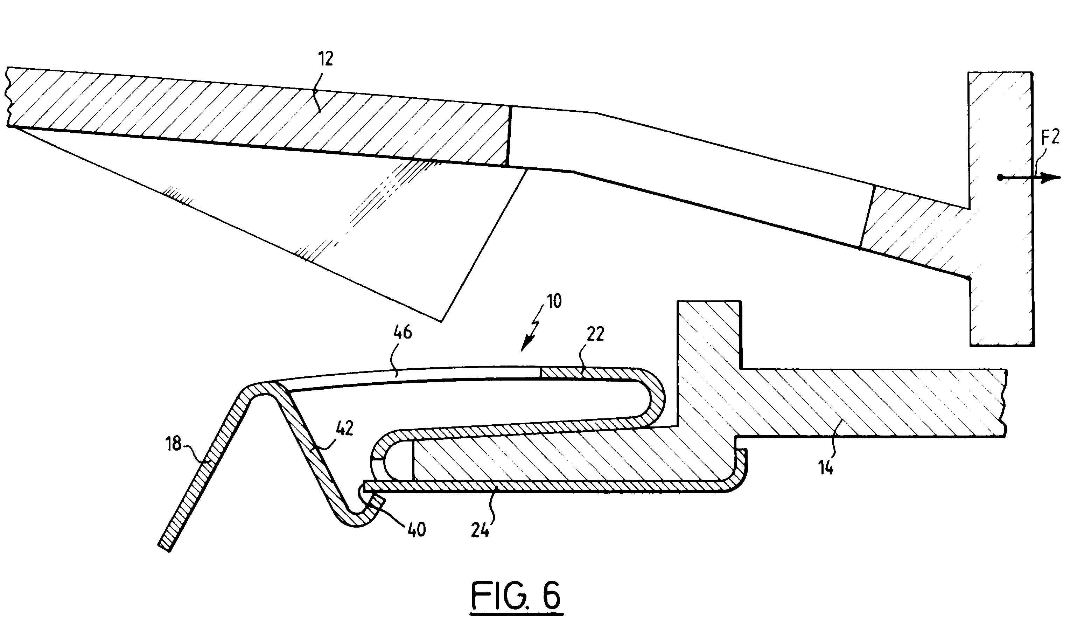

La rampe 22 est repliée suivant une course supérieure à la course d'escamotage minimale requise pour effectuer l'accrochage de la pièce 12 sur le support 14, cette course minimale étant imposée par les dimensions de la saillie 20 de la pièce (voir figure 5). On provoque ainsi l'encliquetage du second crochet 42 sur le premier crochet 40 et le blocage de la patte d'accrochage 18 en position escamotée (voir figure 6).

La pièce 12 peut alors être démontée en la déplaçant dans le sens indiqué par la flèche F2 sur la figure 6, opposé au sens de montage de la pièce, sans qu'il soit nécessaire à un opérateur de maintenir l'attache en position escamotée.

Lorsque la pièce 12 est accrochée sur le support 14 au moyen de plusieurs attaches élastiques telles que celle illustrée sur les figures, il suffit de bloquer chaque attache en position escamotée pour démonter facilement la pièce.

Pour libérer les moyens de blocage 38 de l'attache élastique 10, on introduit la lame de tournevis 50 à travers le crevé 46 ménagé dans la rampe 22, de manière à pousser le second crochet 42 sensiblement perpendiculairement à sa direction d'encliquetage pour le libérer du premier crochet 40.

## Revendications

1. Attache élastique destinée à l'accrochage d'une pièce (12) sur un support (14), l'attache étant destinée à être portée par le support (14) et comportant, d'une part, des moyens d'accrochage (18) escamotables rappelés élastiquement en position active, destinés à coopérer avec des moyens d'accrochage (20) complémentaires agencés sur la pièce (12), et d'autre part, des moyens libérables (38) de blocage des moyens (18) d'accrochage en position escamotée, caractérisée en ce qu'elle est constituée d'une seule pièce métallique en forme de bande pliée (16), les moyens de blocage (38) comprenant des moyens complémentaires d'encliquetage (40,42) ménagés dans cette bande.

2. Attache élastique selon la revendication 1, caractérisée en ce que les moyens de blocage (38) sont activés par escamotage des moyens d'accrochage (18) suivant une course supérieure à la course d'escamotage minimale requise pour effectuer l'accrochage de la pièce (12) sur le support (14).

3. Attache élastique selon la revendication 1 ou 2, caractérisée en ce que les moyens complémentaires d'encliquetage (40,42) sont libérables par déplacement relatif entre eux sensiblement transversalement par rapport à leur direction d'encliquetage.

4. Attache élastique selon la revendication 3, caractérisée en ce qu'elle comprend une embase (24) de fixation sur le support (14) et une rampe (22) d'escamotage des moyens d'accrochage (18) qui relie ces moyens d'accrochage (18) à l'embase de fixation (24) et qui est repliable vers l'embase (24), à l'encontre de la force élastique de rappel des moyens d'accrochage (18), pour escamoter ces moyens d'accrochage, les moyens complémentaires d'encliquetage comportant deux crochets complémentaires (40,42) solidaires, le premier, de l'embase de fixation (24) et, le second, de la rampe d'escamotage (22), ce second crochet (42) étant déformable élastiquement perpendiculairement à sa direction d'encliquetage.

5. Attache élastique selon la revendication 4, caractérisée en ce que les deux crochets (40,42) sont délimités par deux languettes découpées dans la bande (16) de façon à ménager un premier crevé (44) dans l'embase (24) et un second crevé (46) dans la rampe (22), ce dernier crevé (46) permettant l'accès d'un outil (50) destiné à solliciter le second crochet (42) sensiblement perpendiculairement à la direction d'encliquetage, pour le libérer du premier crochet (40).

6. Attache élastique selon la revendication 5, caractérisée en ce que l'embase (24) forme une pince destinée à enserrer une patte de fixation (30) solidaire du support (14), cette pince étant délimitée par deux ailes de serrage (28,26) reliées par une âme (32), l'extrémité libre d'une première aile de serrage (26) étant prolongée par la rampe d'escamotage (22), et le premier crevé (44) étant ménagé dans l'âme (32) de la pince.

## Patentansprüche

1. Elastische Halterung zum Festhaken eines Teils (12) auf einen Träger (14), wobei die Halterung dazu bestimmt ist, durch den Träger (14) getragen zu werden und einerseits in Arbeitsposition elastisch rückgestellte Verhakungsmittel (18) aufweist, die dazu bestimmt sind, mit am Teil (12) angelenkten komplementären Verhakungsmitteln (20) zusammenzuwirken, und andererseits Mittel (38) zum freigebbaren Verriegeln der Verhakungsmittel (18) in versenkter Position, dadurch gekennzeichnet, daß sie aus einem einzigen Metallteil in Form eines winkelförmig gebogenen Streifens (16) besteht, wobei die Verriegelungsmittel (38) komplementäre Verklinkungsmittel (40, 42) aufweisen, die in diesem Streifen gebildet sind.

2. Elastische Halterung nach Anspruch 1, dadurch gekennzeichnet, daß die Verriegelungsmittel (38) durch Versenkung der Verhakungsmittel (18) einer oberen Bahn folgend bei einem minimalen Versenkungsverlauf aktiviert werden, der erforderlich ist, um die Festhakung des Teils (12) auf dem Träger (14) zu bewirken.

3. Elastische Halterung nach Anspruch 1 oder 2, dadurch gekennzeichnet, daß die komplementären Verklinkungsmittel (40, 42) durch eine Relativverschiebung untereinander im wesentlichen quer zu ihrer Verklinkungsrichtung freigebbar sind.

4. Elastische Halterung nach Anspruch 3, dadurch gekennzeichnet, daß sie eine Basis (24) zur Befestigung auf dem Träger (14) und eine Rampe (22) zum Versenken der Verhakungsmittel (18) aufweist, welche diese Verhakungsmittel (18) mit der Befestigungsbasis (24) verbindet, und welche in Richtung auf die Basis (24) entgegen der elastischen Rückstellkraft der Verhakungsmittel (18) umbiegbar ist, um die Verhakungsmittel zu versenken, wobei die komplementären verklinkungsmittel zwei Haken (40, 42) aufweisen, von denen der erste mit der Befestigungsbasis (24) und der zweite mit der versenkbaren Rampe (22) festverbunden ist, wobei dieser zweite Haken (42) senkrecht zu seiner verklinkungsrichtung elastisch verformbar ist.

5. Elastische Halterung nach Anspruch 4, dadurch gekennzeichnet, daß die zwei Haken (40, 42) durch zwei Zungen begrenzt sind, die in den Streifen (16) derart freigeschnitten sind, daß in der Basis (24) eine erster Einschnitt (44) und in der Rampe (22) ein zweiter Einschnitt (46) gebildet ist, wobei der letztgenannte Einschnitt (46) den Zugriff eines Werkzeugs (50) erlaubt, das dazu bestimmt ist, den zweiten Haken (42) im wesentlichen senkrecht zur Verklinkungsrichtung zu beanspruchen, um den ersten Haken (40) freizugeben.

6. Elastische Halterung nach Anspruch 5, dadurch gekennzeichnet, daß die Basis (24) eine Klemme bildet, die dazu bestimmt ist, eine Befestigungsplatte (30) einzuspannen, die fest mit dem Träger (14) verbunden ist, wobei diese Klemme durch zwei Einspannflügel (28, 26) begrenzt ist, die über einen Steg (32) verbunden sind, wobei das freie Ende eines ersten Einspannflügels (26) durch die versenkbare Rampe (22) verlängert ist, und wobei der erste Einschnitt (44) in dem Steg (32) der Klemme gebildet ist.

## Claims

1. Elastic attachment destined to hook a part (12) on a support (14), the attachment being destined to be carried by the support (14) and comprising, on one hand, hooking means (18) which are retractably drawn back in an elastic manner to an active position, destined to co-operate with the hooking means (20) fitted additionally on the part (12), and on the other, releasable means to block the hooking means (18) in a retracted position, characterised by the fact that it is formed by a single metal part in the form of a folded strip (16), the blocking means (38) comprising additional ratcheting means (40, 42) fitted in this strip.

2. Elastic attachment according to claim 1, characterised by the fact that the blocking means (38) are actuated by retracting the hooking means (18) following a course above the minimum retracting course required to carry out the hooking of the part (12) on the support (14).

3. Elastic attachment according to claim 1 or 2 characterised by the fact that the additional ratcheting means (40, 42) are releasable by relative displacement between them which is transverse in relation to their ratcheting direction.

4. Elastic attachment according to claim 3, characterised by the fact that it comprises a fixing base (24) on the support (14) and a retracting ramp (22) for the hooking means (18) which connects these hooking means (18) to the fixing base (24) and which can be folded towards the base (24), against the elastic draw back force of the hooking means (18), to retract these hooking means, the additional ratcheting means comprising two additional hooks (40, 42) the first solid with the fixing base (24) and, the second with the retracting ramp (22), this second hook (42) being deformable elastically and perpendicular to its ratcheting direction.

5. Elastic attachment according to claim 4, characterised by the fact that the two hooks (40, 42) are delimited by two small tongues cut into the band (16) so that a first slash (46) is fitted the base (24) allowing access for a tool (50) destined to stress the second hook slightly perpendicularly in the ratcheting direction to free it from the first hook (40).

6. Elastic attachment according to claim 5, characterised by the fact that the base (24) forms a clamp destined to grip a fixing pad (30) which is solid with the support (14), this clamp being delimited by two clamping wings (28, 26) connected by a core (32), the free extremity of a first clamping wing (26) being extended by the retracting ramp (22), and the first slash (44) being fitted in the core (32) of the clamp.
